# EUROPEAN PATENT SPECIFICATION

(11) **EP 2 215 014 B1**
(45) Date of publication and mention of the grant of the patent: **01.02.2012**
(21) Application number: 08837998.7
(22) Date of filing: 10.10.2008
(51) Int. Cl.: C01G 3/00, G01G 3/02, C01G 33/00, C01G 39/06, C01G 41/04, C09C 3/04, C09C 1/00, C08K 3/00, B01J 27/051

(54) **METHOD FOR DELAMINATING/EXFOLIATING LAYERED CHALCOGENIDES**
VERFAHREN ZUR DELAMINATION/EXFOLIATION VON CHALCOGENIDEN
PROCÉDÉ DE DÉLAMINATION/EXFOLIATION DE CHALCOGENIDES

(30) Priority: 11.10.2007 DK 200701465; 25.01.2008 DK 200800098
(43) Date of publication of application: 11.08.2010
(73) Proprietor: Det Selvejende Institut Cismi (Fond), 4000 Roskilde (DK)
(72) Inventor: SCHAUMBURG, Kjeld, DK-4000 Roskilde (DK)
(74) Representative: Nilausen, Kim
(86) International application number: PCT/EP2008/063607
(87) International publication number: WO 2009/047324

(56) References cited:
- US-A1- 2005 014 867
- US-A1- 2007 158 789
- TYE C T ET AL: "Hydrodesulfurization of dibenzothiophene over exfoliated MoS2 catalyst" CATALYSIS TODAY, ELSEVIER, vol. 116, no. 4, 15 September 2006 (2006-09-15), pages 461-468, XP025116771 ISSN: 0920-5861 [retrieved on 2006-09-15]
- HORSCH S. E. ET AL: "Supercritical CO2 Exfoliated Polymer Nanocomposites" 2006 NSTI NANOTECHNOLOGY CONFERENCE AND TRADE SHOW - NANOTECH 2006 - 9TH ANNUAL, [Online] 2006, XP002519579 Retrieved from the Internet: URL:http://www.nsti.org/Nanotech2006/showa bstract.html?absno=251> [retrieved on 2009-03-16]
- HORSCH S ET AL: "Supercritical CO2 dispersion of nano-clays and clay/polymer nanocomposites" 4 October 2006 (2006-10-04), POLYMER, ELSEVIER SCIENCE PUBLISHERS B.V, GB, PAGE(S) 7485 - 7496 , XP025232301 ISSN: 0032-3861 [retrieved on 2006-10-04] the whole document
- T. WANG ET AL.: "Preparation and mechanism of polystyrene-molybdenum disulfide intercalation materials by a modified two step route" MATERIAL RESEARCH INNOVATION, vol. 7, 16 September 2003 (2003-09-16), pages 366-371, XP002519580

## Description

### FIELD OF THE INVENTION

The present invention relates to the field of exfoliated and delaminated layered inorganic chalcogenides and the use of these materials.

### BACKGROUND OF THE INVENTION

The group of materials termed chalcogenides is characterized as being minerals with a predominantly two-dimensional structure i.e. materials with strong bindings in the individual layer and with weak Van der Waals forces between the layers. The minerals therefore appear as strongly layered. Under pressure shearing of the layers may as a consequence occur. This is the main argument for use of molybdenum sulphide as a lubricant since the layers slide easily. For these reasons it has been used by NASA in low friction materials for space applications.

For many years it has been attempted to find methods whereby the layers may be separated creating a very large specific surface. This goal has successfully been achieved in the processing of clay minerals. These are typically phyllosilicates frequently with strongly hydrophilic properties due to the ionic charges in the layers. The exfoliation of clay may be performed using pressurized water and surfactants. The earliest examples are related to montmorillonite. Süd Chemie has produced this material in large quantities and it has successfully been incorporated in polymer materials used in the automotive industry. It has been found that the addition of some % of exfoliated clay result in better mechanical properties of the polymer, it increases the barrier properties towards gas diffusion and it retards fire. Notably the exfoliated clays have been incapable of performing well in non-polar polymer materials. This has initiated initiatives that circumvent this problem. One of theses has been to introduce new copolymers where one of the components is hydrophilic the other hydrophobic. This improves the dispersion of the clay but the micro-segregation in the materials is a serious drawback. Alternatively the clay platelets may be coated with amphiphilic layers. Again the dispersion is improved, but the clay becomes more expensive and has to be tailored to each application.

US 2005/014867 and WO2005009899 describes a method of delaminating a graphite structure. The method comprises diffusing a coating agent in a supercritical fluid between layered particles of a graphite structure defining contacted graphite particles and catastrophically depressurizing the supercritical fluid to form delaminated graphite particles.

The group of inorganic materials termed chalcogenides is characterized by a layered structure where a two-dimensional structure exists. The interaction in the layer is strong. Since the layers are uncharged the interaction between layers are weak Van der Waals forces. Within the group of chalcogenides it has been more difficult to perform the delamination/exfoliation process. In the literature two methods have been described. Both have been performed on laboratory scale but they have been too dangerous and too costly to be applied in industrial productions.
The first method is a chemically based exfoliation as described in the literature. MoS₂ is treated in dry hexane with n-butyl-lithium for 48 hours under a protective argon atmosphere. Following a thorough washing with hexane and subsequent drying the material is transferred to an airtight container that is transferred into a reactor where it is opened under water. The violent reaction taking place between the water and the lithium compound being distributed between the layers develop hydrogen gas. The gas pressure lifts the layers apart. The layers may restack loosely or they may float separately in the water. The delaminated/exfoliated material may be collected by addition of a surfactant.

The second method is described in W02006108188 and US 2007/0158789 A1, and is a mechanical separation of the layers by exerting an attack from the end planes of the layered material. The attack may be mechanical in the form of a small knife or it may be electrical. Theoretically these methods may achieve a separation down to individual layers. Finally a single surface layer may be peeled off the stack by coating of the surface with an adhesive.

Thus, there is a need in the art for new methods for delamination and/or exfoliation of materials, which method is amenable for industrial scale-up and associated with chemistry being of non-toxic and non-hazardous nature.

### SUMMARY OF THE INVENTION

In order to overcome the above-mentioned limitations of the known method for delamination / exfoliation the present invention provides a new method for delamination / exfoliation of non-ionic inorganic layered chalcogenides.

In one aspect the present invention provides a process for the preparation of a non-ionic inorganic layered chalcogenide comprising the use of supercritical carbon dioxide for delaminating/exfoliating the material by a catastrophical fast release of the pressure.

In one embodiment the process for the preparation of a non-ionic inorganic layered chalcogenide comprises addition of at least one hydrophilic compound to said material prior to release of the pressure. In another embodiment said hydrophilic compound is glycerol.

The invention consists of an efficient method for delamination/exfoliation of layered non-ionic chalcogenide suitable on an industrial scale and the use of the obtained materials. The delamination/exfoliation is obtained by first introducing supercritical carbon dioxide between the layers of the chalcogenide and subsequently releasing the pressure catastrophically whereby the layers are blown apart by the gas pressure. Non-limiting examples of materials that may be treated by this process are WS₂, MoS₂, (Y-, Ba-, Cu- oxide) and other structurally similar superconductors, NbSe₂, Bi₂Sr₂CaCu₂Oₓ, boron-nitride, dichalcogenides, trichalcogenides, tetrachalcogenides and pentachalcogenides.

In another aspect the present invention provides a composition comprising a delaminated / exfoliated chalcogenide incorporated into a chemical network structure such as a hydrogel or an aerogel, said composition obtained by the process comprising the use of supercritical carbon dioxide for delaminating / exfoliating the chalcogenide by a catastrophical fast release of the pressure followed by incorporation of the delaminated / exfoliated chalcogenide into the chemical network structure.

In another aspect the present invention relates to the use of the delaminated /exfoliated inorganic chalcogenide as:
- a gas barrier additive for hydrophobic polymer materials such as polyolefins, or
- a light barrier additive for hydrophobic polymer materials such as polyolefins, or
- an additive to hydrophobic polymeric material to improve the fire retarding properties and/or the mechanical properties of the hydrophobic polymeric material, or
- an additive in special paints primer in e.g. an epoxy binder, antifouling surface paints, heavy duty paints for tanks and tubes, or catalysts.

### DEFINITIONS

Delamination of a layered material is processes whereby large stacks of layers are split apart in stacks having a small number of layers n, n being less than 500 more often less than 200.

Exfoliation of a layered material is a process whereby large stacks of layers are split apart in single layers or in stacks have a small number of layers n, n being less than 100 more often less than 20.

The critical point is the combination of pressure P_{c} and temperature T_{c} above which the compound no longer has a liquid and gaseous state. For combinations of P, T above this point the compound exists in the supercritical state.

Carbon dioxide has a critical point P_{c} = 70 Bar and T_{c} = 31,5 °C. When other compounds are present the mixed system may display supercritical behavior with limiting temperature and pressure different from the data found for the pure carbon dioxide.

Van der Waals force is a universal type of interaction present in all materials. In the cases where electrostatic forces or forces between permanent dipoles are present Van der Waals forces are often neglected since they are much weaker. Only in cases where the other types of interactions are absent Van der Waals forces are of interest. They are distance dependant and their magnitude falls off very rapidly when the distance is increased. It is generally accepted that a distance dependence 1/r⁶ is an appropriate description.

Restacking is a phenomenon occurring after delamination/exfoliation has been attempted. The layers having been lifted apart by the catastrophical depressurization will fall back in top of each other. The Van der Waals forces will act to keep the loose stacks together as before the exfoliation. Since the layers are not properly stacked their distance is increased and the interaction energy is thus much smaller. The restacked material is therefore more readily dispersed in a solvent than the native material.

Intercalation is the phenomena where a molecule is inserted between the layers of a material. Intercalation can be useful to prevent restacking. If a molecule is present as a co-solvent in the supercritical carbon dioxide it may intercalate between the layers during depressurization. The intercalation prevents the restacking and makes it easier to disperse the delaminated/exfoliated material in another material in a subsequent process.

The term catastrophical fast release of the pressure as used herein means an abrupt decrease in pressure so fast that the carbon dioxide found between the layers cannot slowly leak out. Instead the overpressure will try to expand its confinement layers blowing the stack apart.

A cosolvent is a chemical substance that has been added to carbon dioxide. The cosolvent has to be soluble in carbon dioxide. Frequently it is used to increase the solubility in carbon dioxide of polar compounds.

### DETAILED DESCRIPTION OF THE INVENTION

For a number of years CISMI has been developing the technologies based upon use of supercritical carbon dioxide. It has been demonstrated that it is a highly efficient technology for impregnation and extraction since the supercritical carbon dioxide penetrates the materials very efficiently. During this work it was surprisingly found that the technology could be used to obtain an efficient and cheap method for delamination/exfoliation of non-hydrophilic layered materials. The dichalcogenide MoS₂ is mentioned here as one example from this class. Subsequently we have performed many series of experiments demonstrating the efficiency of supercritical carbon dioxide in the delamination/exfoliation of the dichalogenides. Electron microscopy shows the difference between pristine and restacked materials. The process is highly efficient and the processing time is short. The process scales well from laboratory to factory. This opens the possibilities for optimization of the process for special adaptations to various demands. The supercritical carbon dioxide technology is environmentally and ecologically appealing since it is non-toxic and the CO₂ has been produced elsewhere. The use of CO₂ is minimizing the use of organic solvents and eliminates wastewater from the process.

The materials to be delaminated/exfoliated will typically be present as particles of the size 1-50 µ due to a previous grinding process. The particles are placed in a pressure reactor of the type used for treatment with supercritical carbon dioxide. The reactor is then pressurized with carbon dioxide. Often the conditions are chosen to bring carbon dioxide in the supercritical state. This corresponds to a pressure in the range 70 - 500 bar. The application of supercritical carbon dioxide to perform impregnation and extraction is well known and it is industrially used for impregnation of wood and extraction of coffeine from coffee beans and ginseng from the roots. The application for exfoliation / delamination of graphenes has recently been disclosed, US2007/0158789 A1. Supercritical carbon dioxide has a density similar to an organic solvent, but it has no surface tension and therefore it fills out the available space as a gas. The diffusion rates are similar to a gas. These properties make it easy for the CO₂ molecules to diffuse between the layers of the layered materials. This results in an initial swelling of the material. When the pressure subsequently is catastrophically reduced the gas pressure developed between the layers will outweigh the Van der Walls forces and blow the layers apart. The processing rate is limited by the time necessary to establish an equilibrium concentration of carbon dioxide between the layers. Depending on the material chosen it may take from minutes up to a few hours. The delaminated/exfoliated material is after the process present as a dry fluffy material in the reactor.

The carbon dioxide is a non poisonous inactive gas and it is always present in the atmosphere in small concentrations. The process is therefore free from negative influence on the environment.

In order to facilitate the dispersing of the delaminated/exfoliated material in a host material selected for a subsequent application it may be appropriate to add small amounts of additives to carbon dioxide during the process. This may result in a delaminated/exfoliated material with some intercalation more compatible with the host material.

The method invented is the first commercially feasible process for delamination/exfoliation on a large scale and it will make it possible to develop a number of new materials.

Taking MoS₂ as an example the exfoliated MoS₂, will be characterized by:
■ Non-toxic
■ Strongly hydrophobic
■ Film forming
■ Thermally stable(350 °C in oxygen, 1200 °C in an inert atmosphere)
■ Affinity for metal surfaces
■ Change from semiconductor to semimetal by exfoliation
■ Low friction coefficient (0,03 - 0,06)
■ Chemically stable
■ Light absorbing

Potential applications for exfoliated material using MoS₂ as an example are:
- Barrier additive (gas) for hydrophobic polymer materials e.g. polyolefin's. Due to the large surface the delaminated/exfoliated particles will as an additive in the polymer reduce the gas permeability significantly. The mechanical properties may also be modified. In laboratory experiments non-polar polymers as polyethylene and polypropylene have been examined for permeability for Carbon dioxide. It was found that the permeability correlates with the amount of exfoliated MoS₂ which has been added.
- Barrier additive (light) in hydrophobic polymer materials the exfoliated/delaminated MoS₂ platelets will absorb light over a wide range of wavelength in the visible and UV range. Depending on the concentration it will provide full or partly protection against the light.
- Electrically conducting additive MoS₂ platelets as an additive will provide a high level of electrical shielding. This is a consequence of the semi metal properties of exfoliated MoS₂. This property can be used in packaging materials for electronic components and to form polymer electrodes.
- Fire retarding additive for hydrophobic polymer materials.
- Additive for special paints
   ○ Primer in e.g. an epoxy binder. Due to the high affinity for metal surfaces MoS₂ platelets will provide a good coverage of the surface and thereby also corrosion protection.
   ○ Antifouling surface paints. The MoS₂ platelets will due to the hydrophobicity be present in the film surface forming a platelet layer. The MoS₂ is biologically inactive and the platelets are atomically flat. Fouling organisms will therefore have inadequate conditions for attachment to these surfaces. Here it is important that MoS₂ is non toxic and provide an alternative to the biocide antifouling materials.
   ○ Heavy duty paints for tanks and tubes.
   ○ Catalytic materials. MoS₂ finds today application as catalyst in the chemical process industry. Since the MoS₂ platelets are inactive the catalytic activities are linked to the defects and edges of the platelets. By exfoliation/delamination the accessible edges are increased significantly. The catalytic capacity will likewise be increased
   ○ Stabilization of exfoliated/delaminated materials can be obtained by inclusion of these in network structures like hydrogels or aerogels. For this effect the exfoliated material is suspended in a solvent - typically an alcohol or supercritical CO₂ - used as solvent for the network precursor. The network then starts to grow around the suspended platelets. If the process is controlled in such a manner that the pore sizes built up so that they will permit the useful reactants to be transported in the network then the catalytic effects of the exfoliated material will be used to its limits. At the same time the network will ensure that the platelets do not restack. Taking into account the minute size of the platelets, it is advantageous that the network can be subdivided to a mesh desired without having to handle the platelets directly.

### EXAMPLES

### Example 1

MoS₂ in the form of finely ground material is placed in a reactor. The particle size is in the range 0.5 to 10 micron depending on the application. The reactor is treated with CO₂ at 70 °C and 300 bar for 1 hour. The pressure is released in such a configuration that the suspension of MoS₂ in CO₂ is sprayed into a thermostated liquid. The liquid may be silicone oil or other suitable liquids chosen with regard to further processing.

### Example 2.

MoS₂ is placed in a reactor and glycerol with purity 98% or higher is added as a cosolvent. The reactor is treated with CO₂ at 70 °C and 300 Bar for 1 hour. The pressure is released catastrophically. The MoS₂ is found as a silvery looking paste. The suspension is stable over weeks. The compatibility between MoS₂ and glycerol is unexpected due to the hydrophobicity of MoS₂ and the known hydrophilicity of glycerol.

### Example 3.

MoS₂ is placed in a reactor and silicone oil is added as a cosolvent. The molar weight of the oil is selected in the range 10000 - 100000. The reactor is treated with CO₂ at 70 °C and 300 bar for 1 hour. The pressure is released catastrophically. The MoS₂ is found as a black viscous suspension of MoS₂. The suspension is stable over weeks. The compatibility between MoS2 and silicone oil is expected due to the hydrophobicity of MoS₂ and the hydrophobicity of silicone.

### Example 4.

Polyethylene LD is heated in an oven to 100 °C in order to obtain a highly viscous phase. The PE is mixed with exfoliated MoS₂ 3% w/w. The mixed material is kept in a porcelain crucible for use. It is observed that the wetting of the porcelain is much better with the MoS₂ containing material. After cooling to ambient temperature the pure PE can easily be removed from the crucible whereas the MoS₂ containing material is inseparable from the crucible.

### Example 5.

102 mg MoS₂ particles smaller than 15 µm and with an average size of 6 µm is mixed with 1.74 g Glycerin (98%). The mixture is treated with carbon dioxide in a 20 ml reactor made of stainless steel at 40°C at 300 bar pressure for 2 hours using magnetic stirring. Subsequently the pressure is released over a period of 25 min. 1.16 g is taken from the reactor and it is mixed with 3.82 g teramethylorthosilicate (TMOS) and 15.2 g methanol under stirring and under nitrogen atmosphere for 15 min. 68 mg 28-30% ammonia dissolved in 2.00 g water under violent stirring. The stirring continues for 2 minutes after addition of water. The sample then is left for 5 min. Now an additional 80 mg ammonia (28-30%) dissolved in 1.00 g water is added under violent stirring. The stirring is continued for 2 minutes and after an additional 5-10 min. a gel is formed. (The sample does not distort if the glass is turned over). The gel is placed for ripening 24 hours at room temperature and finally ripened 3 weeks at +5°C.

15.5 g wet gel is placed in a 36 ml reactor made of 316 stainless steel. The gel is submerged in methanol and the reactor is closed. The reactor is now washed with 120 ml methanol at a rate of 1 ml/min. The pressure is increased to 100 bar at a rate of 3 bar/min, simultaneously the temperature is raised to 40°C. To replace the methanol 450 g carbon dioxide is pumped through the reactor at a rate of 1g/min at a pressure of 100 bar. The pressure is released at a rate not exceeding 3 bar/min. The dry aerogel weighs 1.09 g containing approximately 6 percent w/w of MoS₂.

## Claims

1. A process for the preparation of a non-ionic inorganic layered chalcogenide comprising the use of supercritical carbon dioxide for delaminating / exfoliating the material by a catastrophical fast release of the pressure.

2. The process according to claim 1 wherein at least one hydrophilic compound is added to said chalcogenide prior to release of the pressure.

3. The process according to any one of claims 1-2 wherein the pressure is in the range from 50 to 500 bar prior to said catastrophical fast release of the pressure.

4. The process according to any one of claims 1-3 wherein said inorganic layered material is selected from the group consisting of WS₂, MoS₂, Y-oxide, Ba-oxide, Cu-oxide, NbSe₂, Bi₂Sr₂CaCu₂Oₓ, boron-nitride, dichalcogenide, trichalcogenide, tetrachalcogenide and pentachalcogenide.

5. The process according to claim 4 wherein said non-ionic inorganic material is MoS₂.

6. The process according to any one of claims 1-5 comprising the steps:
a) placing the non-ionic inorganic layered chalcogenide in a reactor;
b) introducing carbon dioxide into the reactor;
c) increasing the pressure in the reactor;
d) releasing the pressure in the reactor catastrophically fast;
to produce the delaminated/exfoliated chalcogenide.

7. The process according to any one of claims 1-5 wherein said delaminated / exfoliated chalcogenide is incorporated into a chemical network structure such as a hydrogel or an aerogel.

8. A composition comprising a delaminated / exfoliated chalcogenide incorporated into a chemical network structure such as a hydrogel or an aerogel, said composition obtained by the process of claim 7.

9. Use of the delaminated /exfoliated inorganic chalcogenide according to claim 7 as a gas barrier additive for hydrophobic polymer materials such as polyolefins.

10. Use of the delaminated /exfoliated inorganic chalcogenide according to claim 7 as a light barrier additive for hydrophobic polymer materials such as polyolefins.

11. Use of the delaminated /exfoliated inorganic chalcogenide according to claim 7 as an additive to hydrophobic polymeric material to improve the fire retarding properties and/or the mechanical properties of the hydrophobic polymeric material.

12. Use of the delaminated /exfoliated inorganic chalcogenide according to claim 7 as an additive in
- special paints primer in e.g. an epoxy binder, or
- antifouling surface paints, or
- heavy duty paints for tanks and tubes, or
- catalysts.

13. Use of the composition according to claim 8 as :
- a gas barrier additive for hydrophobic polymer materials such as polyolefins, or
- a light barrier additive for hydrophobic polymer materials such as polyolefins, or
- an additive to hydrophobic polymeric material to improve the fire retarding properties and/or the mechanical properties of the hydrophobic polymeric material, or
- an additive for special paints primer in e.g. an epoxy binder, or
- an additive for antifouling surface paints, or
- an additive for heavy duty paints for tanks and tubes, or
- a catalyst.

## Patentansprüche

1. Verfahren zur Herstellung eines nichtionischen, anorganischen, geschichteten Chalcogenids umfassend die Verwendung superkritischen Kohlendioxids zur Delamination/Exfoliation des Werkstoffes durch eine katastrophal schnelle Entlastung des Drucks.

2. Verfahren nach Anspruch 1, wobei dem Chalcogenid vor der Druckentlastung mindestens eine hydrophile Verbindung zugegeben wird.

3. Verfahren nach einem der Ansprüche 1 bis 2, wobei der Druck vor der katastrophal schnellen Druckentlastung im Bereich von 50 bis 500 bar liegt.

4. Verfahren nach einem der Ansprüche 1 bis 3, wobei der anorganische geschichtete Werkstoff aus der Gruppe bestehend aus WS₂, MoS₂, Y-Oxid, Ba-Oxid, Cu-Oxid, NbSe₂, bi₂Sr₂CaCu₂Ox, Boron-Nitrid, Dichalcogenid, Trichalcogenid, Tetrachalcogenid und Pentachalcogenid ausgewählt ist.

5. Verfahren nach Anspruch 4, wobei der nichtionische anorganische Werkstoff MoS₂ ist.

6. Verfahren nach einem der Ansprüche 1 bis 5 umfassend die folgenden Schritte:
a) Platzieren des nichtionischen, anorganischen, geschichteten Chalcogenids in einen Reaktor;
b) Einführen von Kohlendioxid in den Reaktor;
c) Erhöhung des Drucks im Reaktor;
d) katastrophal schnelle Entlastung des Drucks im Reaktor;
zur Herstellung des delaminierten/exfoliierten Chalcogenids.

7. Verfahren nach einem der Ansprüche 1 bis 5, wobei das delaminierte/exfoliierte Chalcogenid in einer chemischen Netzstruktur, wie beispielsweise einem Hydrogel oder einem Aerogel, eingebettet wird.

8. Zusammensetzung umfassend ein delaminiertes/exfoliiertes Chalcogenid, welches in einer chemischen Netzstruktur, wie beispielsweise einem Hydrogel oder einem Aereogel, eingebettet ist, welche Zusammensetzung durch das Verfahren nach Anspruch 7 erhalten ist.

9. Verwendung des delaminierten/exfoliierten anorganischen Chalcogenids nach Anspruch 7 als eines Entgasungsadditivs für hydrophobe Polymerwerkstoffe, wie beispielsweise Polyolefine.

10. Verwendung des delaminierten/exfoliierten anorganischen Chalcogenids nach Anspruch 7 als eines leichten Entgasungsadditivs für hydrophobe Polymerwerkstoffe, wie beispielsweise Polyolefine.

11. Verwendung des delaminierten/exfoliierten anorganischen Chalcogenids nach Anspruch 7 als eines Additivs für hydrophoben, polymeren Werkstoff, um die feuerhemmenden Eigenschaften und/oder die mechanischen Eigenschaften des hydrophoben, polymeren Werkstoffes zu verbessern.

12. Verwendung des delaminierten/exfoliierten anorganischen Chalcogenids nach Anspruch 7 als eines Additivs in
- speziellen Farb-Primern in z.B. einem Epoxidharzbinder, oder
- Antifouling-Oberflächenanstrichmitteln, oder
- Schwerlastanstrichmifteln für Behälter und Rohre, oder
- Katalysatoren.

13. Verwendung der Zusammensetzung nach Anspruch 8 als:
- eines Gasentlastungadditivs für hydrophobe Polymerwerkstoffe, wie beispielsweise Polyolefine, oder
- eines leichten Entgasungsadditivs für hydrophobe Polymerwerkstoffe, wie beispielsweise Polyolefine, oder
- eines Additivs für hydrophoben, polymeren Werkstoff zur Verbesserung der feuerhemmenden Eigenschaften und/oder der mechanischen Eigenschaften des hydrophoben, polymeren Werkstoffes, oder
- eines Additivs für spezielle Farb-Primer in z.B. einem Epoxidharzbinder, oder
- eines Additivs für Antifouling-Oberflächenanstrichmittel, oder
- eines Additivs für Schwerlastanstrichmittel für Behälter und Rohre, oder
- eines Katalysators.

## Revendications

1. Procédé pour la préparation d'un chalcogénure non-ionique, inorganique et stratifié, comprenant l'utilisation de dioxyde de carbone supercritique pour la délamination/l'exfoliation du matériau par une libération catastrophiquement rapide de la pression.

2. Procédé selon la revendication 1, dans lequel au moins un composé hydrophile est ajouté audit chalcogénure avant la libération de la pression.

3. Procédé selon l'une quelconque des revendications 1 à 2, dans lequel la pression est comprise entre 50 et 500 bars avant ladite libération catastrophiquement rapide de la pression.

4. Procédé selon l'une quelconque des revendications 1 à 3, dans lequel ledit matériau inorganique et stratifié est sélectionné dans le groupe constitué de WS₂, MoS₂, oxyde d'Y, oxyde de Ba, oxyde de Cu, NbSe₂, Bi₂Sr₂CaCu₂Oₓ, nitrure de bore, dichalcogénure, trichalcogénure, tetrachalcogénure et pentachalcogénure.

5. Procédé selon la revendication 4, dans lequel ledit matériau non-ionique et inorganique est MoS₂.

6. Procédé selon l'une quelconque des revendications 1 à 5, comprenant les étapes suivantes:
a) de placer le chalcogénure non-ionique, inorganique et stratifié dans un réacteur;
b) d'introduire de dioxyde de carbone dans le réacteur;
c) d'augmenter la pression dans le réacteur;
d) de libérer la pression dans le réacteur de manière catastrophiquement rapide;
pour produire le chalcogénure délaminé/exfolié.

7. Procédé selon l'une quelconque des revendications 1 à 5, dans lequel le chalcogénure délaminé/exfolié est incorporé dans une structure de réseau chimique, telle qu'un hydrogel ou un aérogel.

8. Composition comprenant un chalcogénure délaminé/exfolié incorporé dans une structure de réseau chimique, telle qu'un hydrogel ou un aérogel, ladite composition étant obtenue par le procédé selon la revendication 7.

9. Usage du chalcogénure délaminé/exfolié inorganique selon la revendication 7 en tant qu'un additif de barrière aux gaz pour les matériaux polymères et hydrophobes, tels que les polyoléfines.

10. Usage du chalcogénure délaminé/exfolié inorganique selon la revendication 7 en tant qu'un additif de barrière lumineuse pour les matériaux polymères et hydrophobes, tels que les polyoléfines.

11. Usage du chalcogénure délaminé/exfolié inorganique selon la revendication 7 en tant qu'un additif au matériau polymère et hydrophobe pour améliorer les propriétés ignifuges et/ou les propriétés mécaniques du matériau hydrophobe et polymère.

12. Usage du chalcogénure délaminé/exfolié inorganique selon la revendication 7 en tant qu'un additif dans
- les peintures d'apprêt spéciales, par exemple dans un liant époxy, ou
- les peintures antisalissures de surface, ou
- peintures pour service sévère pour les réservoirs et les tubes, ou
- les catalyseurs.

13. Usage de la composition selon la revendication 8 en tant:
- qu'un additif de barrière aux gaz pour les matériaux polymères et hydrophobes, tels que les polyoléfines, ou
- qu'un additif de barrière lumineuse pour les matériaux polymères et hydrophobes, tels que les polyoléfines, ou
- qu'un additif au matériau polymère et hydrophobe pour améliorer les propriétés ignifuges et/ou les propriétés mécaniques du matériau hydrophobe et polymère, ou
- qu'un additif pour les peintures d'apprêt spéciales, par exemple dans un liant époxy, ou
- qu'un additif pour les peintures antisalissures de surface, ou
- qu'un additif pour les peintures pour service sévère pour les réservoirs et les tubes, ou
- qu'un catalyseur.
